# EUROPÄISCHE PATENTSCHRIFT

(11) **EP 1 857 897 B1**
(45) Veröffentlichungstag und Bekanntmachung des Hinweises auf die Patenterteilung: **15.01.2014**
(21) Anmeldenummer: 06009937.1
(22) Anmeldetag: 15.05.2006
(51) Int. Cl.: G05B 19/042, G06F 21/00

(54) **Verfahren und System zur Erstellung oder Änderung sicherheitsrelevanter Daten für eine Steuerungseinrichtung**
Method and system for producing or changing security relevant data for a control unit
Procédé et système destinés à la production ou la modification de données relative à la sécurité pour un dispositif de commande

(43) Veröffentlichungstag der Anmeldung: 21.11.2007
(73) Patentinhaber: ABB PATENT GmbH, 68526 Ladenburg (DE)
(72) Erfinder: Eriksson, Peter, 72341 Västeras (SE); Kock, Sönke, 72463 Västeras (SE); Brehdahl, Jan, 72245 Västeras (SE); Niehaus, Michael, 61197 Florstadt (DE)
(74) Vertreter: Miller, Toivo

(56) Entgegenhaltungen:
- EP-A- 1 150 190
- US-A- 5 648 898
- US-A- 6 081 755
- US-A1- 2002 120 856
- US-B1- 6 785 816

## Beschreibung

Die Erfindung betrifft ein Verfahren und ein System zur Erstellung oder Änderung sicherheitsrelevanter Daten für eine Steuerungsvorrichtung und deren Aktivierung.

Es ist allgemein bekannt, dass bei Steuerungseinrichtungen, die mit sicherheitsrelevanten Daten arbeiten bei der Änderung solcher Daten besondere Kontroll- und Überprüfungsschritte vorgesehen sind. Mit Sicherheit ist hier die Arbeits- oder Personensicherheit im Sinne des englischen Wortes "Safety" gemeint. Eine derartige Steuerungseinrichtung kann zum Beispiel die Steuerungsvorrichtung zur Überwachung eines Roboters oder eine Einrichtung zur Steuerung und Überwachung der Abläufe einer Fertigungszelle sein. Bei der Ausführung von Roboterbewegungen besteht zum Beispiel ganz allgemein die Möglichkeit, dass die sich in dessen Arbeitsbereich aufhaltende Personen gefährdet sind. Dies soll jedoch vermieden werden. Daher sind zum Beispiel sicherheitsrelevante Daten für einen derartigen Roboter zum Beispiel solche Daten, die mit Hilfe einer Steuerungseinrichtung oder direkt in der Robotersteuerung den Bewegungsablauf des Roboters überwachen oder einschränken und damit den durch die Roboterbewegung potentiell gefährdeten Bereich entsprechend absichern. Sicherheitsrelevante Daten sind aber auch Programme und Daten, die zum Beispiel in einer Steuerungseinrichtung verarbeitet werden, um die Gefährdung eines Maschinenbedieners durch Erzeugung von Signalen zur Ansteuerung von Schutzeinrichtungen ausschließen soll. Diese Signale werden abhängig von weiteren Signalen, die von mindestens einer sicherheitsgerichteten Einrichtung ausgesandt werden, zum Beispiel von einem Türschalter oder einem Laserscanner, und den sicherheitsrelevanten Daten, die in der Steuerungseinrichtung verarbeitet werden, erzeugt (Prinzip der speicherprogrammierbaren Steuerung).

Aus der Sicherheitstechnik ist bekannt, dass die meisten Unfälle nicht von einem Versagen der Sicherheitseinrichtungen, sonder von bewusster Manipulation derselben durch Bedien- oder Instandsetzungspersonal herrühren. Aus diesem Grund ist stets darauf zu achten, dass die Manipulation von sicherheitsgerichteten Steuerungsdaten möglichst verhindert oder dass der Aufwand zur Manipulation derselben durch geeignete Verfahren möglichst hoch angesetzt wird (das entspricht dem englischen Begriff "Security").

Durch das Aufkommen konfigurierbarer und programmierbarer Steuerungseinrichtungen kommt zusätzlich das Risiko hinzu, dass der Inbetriebnehmer falsche Programme und Daten aktiviert, so dass ein zusätzlicher Schutz wünschenswert wäre, der der Vertauschung und irrtümlichen Aktivierung von Programmen und Konfigurationsdaten vorbeugt.

Für die Erstellung oder Änderung sicherheitsrelevanter Daten für solche Steuereinrichtungen ist allgemein bekannt, dass zunächst ein spezielles Benutzerprogramm auf einem Konfigurationscomputer gestartet wird. Mit diesem Programm werden dann Eingaben oder Änderungen durchgeführt, die in die Steuerungseinrichtung heruntergeladen werden. Anschließend werden die Daten von der Steuerungseinrichtung auf den Konfigurationscomputer zurückgeladen, wobei der Konfigurationscomputer beim Zurückladen der sicherheitsrelevanten Daten im Konfigurationsprogramm aus Sicherheitsgründen vergleicht, ob das zurückgeladene Programm dem ursprünglichen Programm entspricht. Auf diese Weise wird festgestellt, ob während der Übertragung des Programms Fehler aufgetreten sind, oder ob die Änderungen akzeptiert werden können. In einem letzten Schritt wird der Steuerungseinrichtung vom Benutzer der Befehl erteilt, die neuen Daten zu akzeptieren und auszuführen.

Die US 6 081 755 beschreibt ein Gerät für die Fahrzeugsteuerung, wobei in einem Speichergerät mit zwei Speicherbereichen das Fahrzeugsteuerungsprogramm gespeichert ist, welches aktualisiert werden kann, während das Speichergerät eingebaut ist.

In der US 6 785 816 B1 ist ein System und ein Verfahren für die geschützte Konfiguration von Daten für programmierbare Logikgeräte beschrieben. Ein oder mehrere Speicher dienen zur Speicherung der Konfigurationsdaten einschließlich eines oder mehr Bitströme und zugeordnete Kennzeichen zur Authentifizierung.

Aus der EP 1 150 190 A2 schließlich ist eine Vorrichtung und ein Verfahren zur Steuerung und/ oder Regelung des Betriebs einer Anlage bekannt, gemäß welchem zu schützende Applikationsdaten verschlüsselt in einem externen Speicher abgelegt und bei Start der Anlage in einen internen Arbeitsspeicher eines Steuergerätes eingelesen werden.

Ausgehend von diesem Stand der Technik ist es Aufgabe der Erfindung, ein Verfahren und ein System zur Erstellung und Änderung sicherheitsrelevanter Daten für eine Steuerungseinrichtung anzugeben, das flexibler, sicherer und einfacher als die bisher bekannten einsetzbar ist.

Diese Aufgabe wird erfindungsgemäß durch das Verfahren zur Erstellung und Änderung sicherheitsrelevanter Daten für eine Steuerungseinrichtung mit den in Anspruch 1 genannte Merkmalen gelöst.

Dabei weist das erfindungsgemäße Verfahren zur Änderung der besagten sicherheitsrelevanten Daten für eine Steuerungseinrichtung folgende Schritte auf:
- Erstellung von neuen oder geänderten Daten auf einer Datenverarbeitungsanlage,
- Automatische Erzeugung eines Freigabecodes, der möglichst eindeutig den erzeugten Datensatz identifiziert,
- Verschlüsselung des Freigabecodes mit Hilfe eines Verfahrens, das den Code für den Menschen unlesbar macht, aber der Steuerungseinrichtung bekannt ist, so dass sie den Freigabecode entschlüsseln kann,
- Versiegelung der neuen oder geänderten Daten mit einer ersten Prüfsumme über die Daten,
- Speicherung der versiegelten Daten und der ersten Prüfsumme in wenigstens einem Datensatz auf der Datenverarbeitungsanlage,
- Lesen der versiegelten Daten aus einem Speicher der Datenverarbeitungsanlage,
- Anzeigen der Daten mit Hilfe eines Anzeigeprogramms oder einer Druck- oder Zeicheneinrichtung, wobei das Anzeigeprogramm nicht mit dem Eingabeprogramm identisch ist,
- Überprüfung auf Identität der geänderten Daten mit den zurückgelesenen Daten durch den Benutzer
   sowie
- Bildung einer zweiten Prüfsumme und Speicherung der zweiten Prüfsumme in dem wenigstens einen Datensatz, nachdem die Fehlerfreiheit festgestellt wurde.

Das erfindungsgemäße Verfahren zeigt eine Möglichkeit auf, die sicherheitsgerichteten Daten zu erfassen oder zu ändern und durch Bildung von Prüfsummen sowohl die einzelnen Verfahrensschritte als auch die Überprüfung, ob die geänderten Daten auch wirklich die gewünschte Änderung darstellen, auch unter den geforderten Sicherheitsanforderungen Sicherheitsanforderungen, siehe zum Beispiel DIN EN 61508-3 überprüfen. Auf die vorstehend beschriebene Weise ist auch sichergestellt, dass die Datenerstellung oder -änderung ohne unmittelbare Verbindung ("offline") zu der betreffenden Steuerungseinrichtung erfolgen kann, in vorteilhafter Weise sogar unter Verwendung eines universellen oder Standardcomputers und später ohne erneute Überprüfung auf eine Steuerungseinheit zu laden. Unter Steuerungseinrichtung oder Steuerungseinheit ist auch eine Überwachungseinrichtung zu verstehen. Es ist sogar möglich, dass der erstellte Datensatz mit neuen oder geänderten Daten für mehrere Steuerungseinrichtungen verwendet wird. Dies könnte zum Beispiel von Vorteil sein, wenn mehrere identische Produktionsanlagen verwendet werden, für die eine besonders rasche Inbetriebnahme der jeweiligen Steuerungseinrichtungen gewünscht ist.

Das erfindungsgemäße Verfahren ermöglicht es zudem ohne Austausch von Sicherheitsprogrammen zwischen der Datenverarbeitungsanlage und der Steuerungseinrichtung die entsprechenden oder gewünschten Erstellungen oder Änderungen vorzunehmen. Auch hierin besteht ein Flexibilisierungsschritt zu den bisher bekannt gewordenen Verfahren.

Das erfindungsgemäße Verfahren ermöglicht es außerdem, dass zwischen dem Konfigurations-PC und der Steuerungseinrichtung keine direkte Verbindung besteht, sondern dass stattdessen die Datenübertragung mit tragbaren Datenträgern (z.B. Speicherkarte, USB-Stick, Diskette) erfolgt, oder dass eine weitere Datenverarbeitungsanlage oder Steuerungseinheit als Zwischenspeicher fungiert und die relevanten Daten auf Anfrage über eine direkte Verbindung an die eigentliche Steuerungseinrichtung weiterleitet.

Eine Fortbildung des erfindungsgemäßen Verfahrens zur Erstellung und Änderung sicherheitsrelevanter Daten in einer Steuerungseinrichtung ist dadurch gekennzeichnet, dass der wenigstens eine Datensatz mit den versiegelten Daten, mit der ersten und der zweiten Prüfsumme als wenigstens ein neuer Datensatz die Steuerungseinrichtung übertragen wird und dass der wenigstens eine neue Datensatz von der Steuerungseinrichtung geprüft wird bevor dieser in der Steuerungseinrichtung aktiviert wird.

Auf diese Weise kann der wenigstens eine neue Datensatz in besonders einfacher Weise auf die Steuerungseinrichtung, die die sicherheitsrelevanten Daten benutzt, übertragen werden. Auf diese Weise ist die Datenübertragung von sicherheitsrelevanten Daten auf die Steuerungseinrichtung besonders einfach realisiert.

Eine zweckmäßige Ausgestaltung des erfindungsgemäßen Verfahrens sieht vor, dass vor der Aktivierung des wenigstens einen neuen Datensatzes ein Freigabeverfahren durchgeführt wird, bevorzugt eine Freigabe durch einen Freigabecode eines berechtigten Benutzers erfolgt.

Durch das Durchführen des Freigabeverfahrens wird eine zusätzliche Sicherheit durch eine zusätzliche Überprüfung des wenigstens einen neuen Datensatzes vor der Aktivierung in der Steuerungseinrichtung ermöglicht. Dabei kann das Freigabeverfahren automatisch durch Vergleich mit anderen Datensätzen erfolgen, aber auch bevorzugt durch Überprüfung durch einen berechtigten Benutzer, zum Beispiel einen Bediener (Operator) oder Inbetriebnehmer. Dabei ist es besonders vorteilhaft, wenn sich ein solcher Benutzer, der die Freigabe tätigt, durch einen PIN-Code (Personal Identification Number-Code) oder ein Passwort identifiziert und damit auch dokumentiert, wer die Freigabe erteilt hat, und anschließend einen Freigabecode eingibt, der vor dem Erstellen der ersten Prüfsumme durch das Erstellungsprogramm erzeugt wurde, und der den freizugebenden Datensatz möglichst eindeutig identifiziert. Um das zu ermöglichen, sollte der Freigabecode von einem Zufallsgenerator erstellt worden sein und mindestens drei, vorteilhafterweise vier Dezimalziffern, Buchstaben oder andere lesbare Zeichen enthalten. Der irrtümlichen Freigabe eines falschen Datensatzes durch Vertauschung ist vorgebeugt, indem der Freigabecode nur für jeweils einen einzigen Datensatz gültig ist und sich der Inbetriebnehmer vorher um den richtigen Freigabecode bemühen muss. Eine pauschale Freigabe etwa mit einem Standard-Passwort für Sicherheitseinrichtungen ist damit nicht mehr möglich, wodurch eine irrtümliche Aktivierung so gut wie ausgeschlossen ist.

Eine weitere Erhöhung der Sicherheit bei der Bearbeitung der sicherheitsrelevanten Daten ist erfindungsgemäß dadurch erreicht, dass im Freigabeverfahren die Berechtigungsdaten, die zwischen der Steuerungseinrichtung und zum Beispiel einem Eingabegerät ausgetauscht werden, verschlüsselt sind.

Eine weitere Erhöhung der Sicherheit bei der Bearbeitung und Aktivierung der sicherheitsrelevanten Daten ist erfindungsgemäß dadurch erreicht, dass die eigentlichen Daten unverschlüsselt und in mit einfachen Mitteln vom Menschen lesbarer Form in einer Datei vorliegen (zum Beispiel im XML-Format), so dass sich der Inbetriebnehmer zu jeder Zeit noch einmal vom Inhalt der Daten überzeugen kann, ohne jedoch die Möglichkeit zu haben, die versiegelten Daten nach dem Erzeugen der zweiten Prüfsumme zu ändern oder zu manipulieren, und ohne unberechtigterweise den Aktivierungscode auszulesen.

Die Aufgabe wird zudem gelöst durch ein System zur Durchführung des erfindungsgemäßen Verfahrens zur Änderung sicherheitsrelevanter Daten für eine Steuerungseinrichtung mit den in Anspruch 12 genannten Merkmalen.

Demnach weist ein erfindungsgemäßes System zur Durchführung eines erfindungsgemäßen Verfahrens zur Änderung sicherheitsrelevanter Daten für eine Steuerungseinrichtung eine Datenverarbeitungsanlage auf, die eine erste Eingabevorrichtung zur Erstellung von neuen oder geänderten Daten und ein erstes Verschlüsselungsmodul aufweist. Zudem ist die Datenverarbeitungsanlage wenigstens zeitweise mit der Steuerungsanlage verbunden, wobei die Datenverarbeitungsanlage ein zweites Verschlüsselungsmodul aufweist und wobei die Verschlüsselungsmethoden des ersten und des zweiten Verschlüsselungsmoduls dem jeweils anderen Verschlüsselungsmodul bekannt sind.

Die Datensicherheit wird hier insbesondere durch die erfindungsgemäße Anordnung der Verschlüsselungsmodule in der Steuerungseinrichtung und der Datenverarbeitungsanlage sichergestellt. Auf diese Weise ist die Datenverarbeitungsanlage ohne weiteres zu betreiben und die Datenerstellung und -änderung kann damit auf dieser durchgeführt werden. Nur zeitweise wird diese mit der Steuerungseinrichtung verbunden sein, nämlich insbesondere zu dem Zeitpunkt, an dem die Daten oder der wenigstens eine neue Datensatz übertragen werden. Ein derart gestaltetes System ist somit besonders flexibel einsetzbar. Über die erwähnten alternativen Verfahren können die Daten einfach auch ohne direkte Verbindung übertragen werden.
Zur weiteren Flexibilisierung des erfindungsgemäßen Systems ist es vorgesehen, dass die Steuerungseinrichtung eine zweite Eingabevorrichtung aufweist oder auf eine solche Vorrichtung Zugriff hat.

Auf diese Weise können unabhängig von der ersten Eingabevorrichtung an der Datenverarbeitungsanlage zusätzliche Sicherheitsabfragen oder Bestätigungen über eine zweite Eingabevorrichtung an der Steuerungseinrichtung vorgenommen werden.

Weitere vorteilhafte Ausgestaltungen des Erfindungsgegenstandes sind den abhängigen Ansprüchen zu entnehmen.

Anhand von den in den Zeichnungen dargestellten Ausführungsbeispielen sollen die Erfindung, vorteilhafte Ausgestaltungen und Verbesserungen der Erfindung, sowie besondere Vorteile der Erfindung näher erläutert und beschrieben werden.

### Es zeigen:

- Fig. 1: ein Verfahrensablauf für ein Verfahren zur Erstellung oder Änderung sicherheitsrelevanter Daten,
- Fig. 2: ein System zur Durchführung eines Verfahrens zur Erstellung oder Änderung sicherheitsrelevanter Daten und
- Fig. 3: ein System zur Durchführung eines Verfahrens zur Aktivierung sicherheitsrelevanter Daten in einer Steuerungseinrichtung.

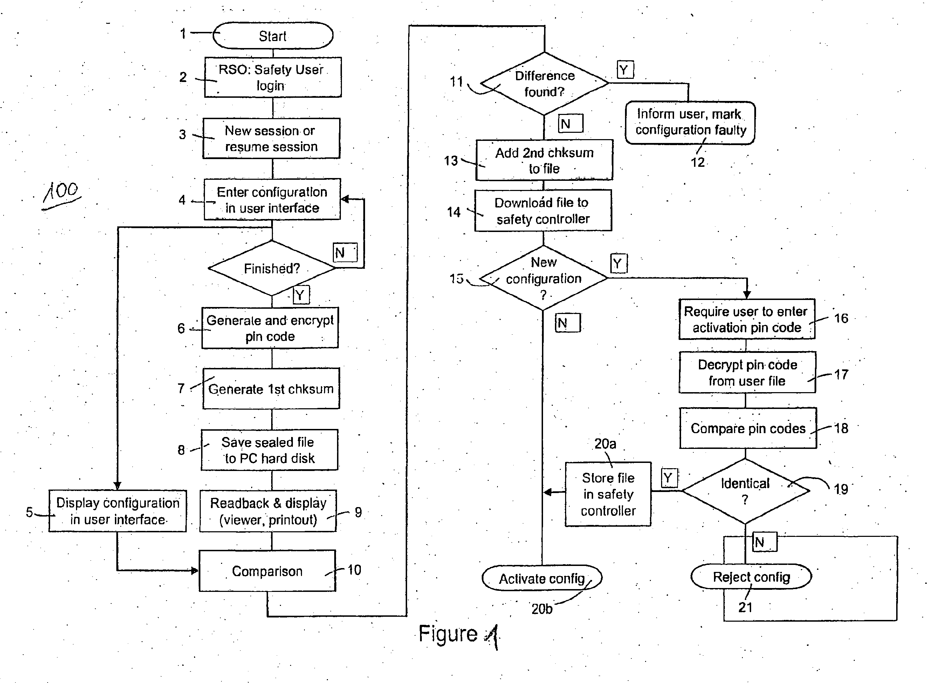

Fig. 1 zeigt ein Verfahrensablauf 100 eines erfindungsgemäßen Verfahrens zur Erstellung oder Änderung sicherheitsrelevanter Daten in einer Steuerungseinrichtung, die im gewählten Beispiel in eine Robotersteuerung eingebaut ist. Im Beispiel ist das erfindungsgemäße Verfahren zudem als Programmprodukt ausgestattet, das auf einer universellen Datenbearbeitungsanlage ausgeführt wird, wobei die Verfahrensschritte im Folgenden näher erläutert werden sollen.

In einem ersten Schritt 1 wird das Verfahren gestartet, beispielsweise indem ein entsprechendes Konfigurationsprogramm auf einem Standardcomputer, wie einem Universal-PC, gestartet wird. Zur Zugangskontrolle zu dem Verfahren wird im gewählten Beispiel zunächst die Zugangsberechtigung zur Benutzung des Verfahrens abgefragt durch einen zweiten Schritt 2. In einem dritten Schritt 3 wird der Benutzer nun vor die Auswahl gestellt, eine neue Konfiguration von Daten zu erstellen oder die Arbeit an eine bereits bestehende Konfiguration fortzuführen. Je nach Ausgestaltung des erfindungsgemäßen Verfahrens wird in einem vierten Schritt 4 der Benutzer mit Hilfe von Zusatzfunktionen, wie zum Beispiel interaktive Hilfe, graphische Unterstützung, Tabellenübersichten, Ablaufpläne oder sonstige Informationen, über die Robotersteuerungseinstellung, über bisherige Arbeitsabläufe oder ähnlichem unterstützt.

Es hat sich zudem als nützlich erwiesen, dass in einem fünften Schritt 5 die jeweils aktuellen Konfigurationsdaten, die in Arbeit sind, gegebenenfalls auch im Vergleich zu den ursprünglichen Konfigurationsdaten angezeigt werden. Auf diese Weise ist besonders leicht jegliche Änderung erkennbar und zudem angezeigt, welche Daten bereits eingegeben oder verändert wurden. Das Verfahren verbleibt nun solange im vierten Schritt 4 und dem fünften Schritt 5, bis die Dateneingabe vollständig erfolgt ist. Sobald dies der Fall ist, beispielsweise durch eine entsprechende Bestätigung einer Abfrage, ob die Daten vollständig eingegeben sind, wird in einem sechsten Schritt 6 mit einem Zufallsgenerator ein zufälliger Freigabecode erzeugt und dieser mit einem geeigneten Verfahren verschlüsselt und damit für den Menschen unleserlich gemacht. Solche Verschlüsselungen und Möglichkeiten sind allgemein bekannt, ebenso die Arbeit mit diesen sogenannten PIN-Codes (Personal Identification Number). Als Verschlüsselungsverfahren seien hier nur beispielhaft die symmetrische Verschlüsselung oder die asymmetrische Verschlüsselung genannt. Dabei stellt die beschriebene Verschlüsselung auch der sicherheitsrelevanten Daten nur eine Option dar. Es ist völlig ausreichend, wenn nur die Prüfsumme oder die Prüfsummen verschlüsselt werden.

Dabei ist sichergestellt, dass die Verschlüsselungsmethode sowohl vom Universalcomputer als auch von der Steuerungseinrichtung gekannt wird, damit letztere den Freigabecode wieder entschlüsseln kann, dass aber ein unbefugter den Freigabecode nicht aus dem Datensatz herauslesen kann. Nun werden die Konfigurationsdaten als Datensatz auf dem Hauptspeicher des Standardrechners gespeichert. In einem siebten Schritt 7 wird nun eine erste Prüfsumme über den Datensatz gebildet und ebenfalls im Datensatz gespeichert. Das Verfahren, wie genau die erste Prüfsumme gebildet wird, ist nur auf dem Standard-PC und der Steuerungseinrichtung bekannt. Auch dieser Verfahrensschritt erhöht die Sicherheit gegen eine mögliche fehlerhafte Übertragung von Konfigurationsdaten, beispielsweise durch fehlerhafte Übertragung, durch fehlerhafte Speicherung oder ähnliche Fehler, die bei Datenverarbeitungsanlagen auftreten können, aber auch die Sicherheit gegen manuelle Manipulation der Daten durch unbefugte Personen. In einem achten Schritt 8 wird die komplette Konfigurationsdatei, also die Konfigurationsdaten, der Freigabecode und die erste Prüfsumme als File auf der Festplatte oder einem anderen dauerhaften Speicher des Standard-PCs gespeichert.

Dieser Datensatz stellt nun im Wesentlichen alle Informationen bereit, die von der Steuerungseinrichtung benötigt werden. Zur weiteren Erhöhung der Sicherheit wird jedoch in einem neunten Schritt 9 derjenige Benutzer, der die Änderungen der sicherheitsrelevanten Daten veranlasst hat, aufgefordert die gespeicherten Daten zu überprüfen, und zwar in der Art, dass die auf der Festplatte oder ähnlichem gespeichertem Datensatz gelesen und auf einer Anzeigevorrichtung, beispielsweise mit Hilfe einer entsprechenden Anzeigesoftware auf einem Bildschirm oder ähnlichem angezeigt werden. Zusätzlich oder alternativ zum Anzeigen, kann auch der Ausdruck der Daten auf einer entsprechenden Druckvorrichtung erfolgen. Er hat jetzt die Aufgabe die Daten mit dem in Schritt 5 angezeigten Daten zu vergleichen, wobei sich die Form der Darstellung in Schritt 5 und Schritt 9 unterscheidet. Dieser Vergleich erfolgt in Schritt 10 durch den besagten Benutzer, der nun für alle Daten, die im Datensatz gespeichert sind überprüft, ob alle Änderungen dem Gewünschten entsprechen. Findet der Benutzer Fehler, wird das Verfahren gemäß einem elften Schritt 11 in einen früheren Verfahrensschritt zurückversetzt, der es ermöglicht den gefundenen Fehler zu korrigieren, neue oder geänderte sicherheitsrelevante Daten einzugeben und entsprechend den zuvor gemachten Schritten zu verschlüsseln und das Verfahren so ablaufen zu lassen, dass schließlich wieder der elfte Schritt 11 erreicht wird. Hierüber wird der Benutzer in einem zwölfte Schritt 12 informiert. Insbesondere wird der Benutzer über die aufgetretene Differenz bei den sicherheitsrelevanten Daten, darüber, dass die Konfigurationsdaten als Fehlerhaft markiert sind und darüber, dass diese Konfigurationsdaten nicht für die Steuerungseinrichtung verwendet werden kann, sondern nur über entsprechende weitere Verfahrensschritte wie oben beschrieben weiterbehandelt werden kann, informiert.

Nur in dem Fall, dass keine Differenz gefunden wird, also keine fehlerhaften Konfigurationsdaten aufgetreten sind, wird in einem dreizehnten Schritt 13 eine zweite Prüfsumme gebildet und diese ebenfalls im Datensatz gespeichert, so dass im Datensatz selbst kenntlich ist, dass eine Überprüfung der Daten durch den Benutzer stattgefunden hat.

Die Verfahrensschritte erster Schritt 1 bis dreizehnter Schritt 13 ermöglichen im Wesentlichen, eine sogenannte "Offline" in Bearbeitung von sicherheitsrelevanten Daten, also eine Erstellung eines geänderten Datensatzes für sicherheitsrelevanten Daten, ohne dass der hierfür verwendete Standard-PC an die Steuerungseinrichtung angeschlossen sein muss. Hierin besteht ein wesentlicher Vorteil des erfindungsgemäßen Verfahrens, nämlich dass sowohl orts- als auch zeitunabhängig Datensatzänderungen durchgeführt werden können. Gleichwohl ist die Sicherheit und die Absicherung des geänderten Datensatzes gegen ungewollte Beschädigung, unbeabsichtigte Fehleingabe oder auch gewollte Manipulation zur Außerkraftsetzung oder Änderung von Sicherheitsüberwachungen durch mehrere Kontroll- und Zugangsschutzmechanismen ausreichend abgesichert. Der auf diese Weise erstellte Datenfile kann ohne Probleme an eine oder auch mehrere Steuerungseinrichtungen übertragen werden, die den besagten Datenfile als überprüfte und sichere Daten erkennen werden.
Wie im einzelnen die sicherheitsrelevanten Daten des Datensatzes nun auf die Robotersteuerung gelangen und wie diese überprüft werden soll im folgenden näher erläutert werden.

In einem vierzehnten Schritt 14 wird der Datensatz nun vom PC auf die Robotersteuerung übertragen. Dabei ist es unerheblich, ob die Daten unmittelbar von der Festplatte oder einem entsprechenden Medium auf die Steuerungseinrichtung übertragen oder beispielsweise über eine Netzwerkverbindung, die der Standard-PC mit der Steuerungseinrichtung verbindet, oder über einen tragbaren Datenträger, oder über einen weiteren Steuerungsrechner, der als zwischengeschalteter Datenbroker fungiert. In einem fünfzehnten Schritt 15 wird die Steuerungseinrichtung zunächst feststellen, ob die erhaltenen Konfigurationsdaten neu sind, also eine Änderung zu den bisher bekannten Daten darstellt, oder ob die erhaltenen Daten bereits zuvor in der Steuerung benutzt wurden. An diese Überprüfung kann auf verschiedene, allgemein bekannte Arten erfolgen. Es bietet sich jedoch an, bei einer Verwendung von Prüfsummen, genau diese dazu zu benutzen, um die erhaltenen Konfigurationsdaten zu überprüfen. Hierzu werden die erhaltenen Prüfsummen in der Konfigurationsdatei verglichen mit den bekannten und in einem Dauerspeicher (Speicherkarte, Festplatte, Diskette oder ähnlichem) enthaltenen Prüfsummen. Statt Prüfsummen können auch so genannte Hash-Codes verwendete werden, die ansich allgemein bekannt sind, oder es kann auch ein vollständiger Vergleich der Daten durchgeführt werden.

In dem Fall, dass neue Konfigurationsdaten detektiert werden, wird in einem sechzehnten Schritt 16 der Benutzer über ein entsprechendes "Interface", beispielsweise eine Anzeigevorrichtung am Handbediengerät oder am Bedienterminal abgefragt, ob die erhaltenden neuen Konfigurationsdaten in der Robotersteuerung aktiviert werden sollen. Für eine derartige Bestätigung, ist es insbesondere sinnvoll einen Aktivierungscode abzufragen, insbesondere kann hierfür derjenige verschlüsselte Aktivierungcode, der im sechsten Schritt 6 erstellt wurde, verwendet werden. Es ist auch denkbar, dass zusätzlich ein anderer individualisierender Code, der den Benutzer, der die Eingabe tätigt, als berechtigten Benutzer kennzeichnet, verwendet wird. Der eingegebene Aktivierungscode wird dann an die Steuerungseinrichtung übermittelt. In einem siebzehnten Schritt 17 wird der entsprechende Code der Konfigurationsdatei von der Steuerungseinrichtung entschlüsselt. In einem achtzehnten Schritt 18 schließlich werden die durch den Benutzer eingegebenen Code aus dem sechzehnten Schritt 16 und dem Code aus der Konfigurationsdatei durch die Steuerungseinrichtung verglichen beziehungsweise überprüft und durch Identität oder entsprechende andere Berechtigungsprüfungen festgestellt, ob die Berechtigung besteht den File zu aktivieren oder nicht (was in einem neunzehnten Schritt 19 geschieht). Wird in einem neunzehnten Schritt 19 festgestellt, dass der Vergleich der Codes zu einer Nichtberechtigung führt, stellt das erfindungsgemäße Verfahren in einem einundzwanzigsten Schritt 21 fest, dass die Konfigurationsdatei nicht aktiviert und entsprechend zurückgewiesen wird.

In einem alternativen Verfahren kann die Entschlüsselung des Codes durch die Steuerungseinrichtung entfallen und stattdessen der vom Bediener eingegebene Code mit einem identischen Verfahren verschlüsselt werden, so dass die Prüfung auf Identität anhand der verschlüsselten Codes erfolgt. Das ermöglicht die Verwendung von Verschlüsselungsverfahren, die nur in eine Richtung funktionieren.

In dem anderen Fall, nämlich dass im neunzehnten Schritt 19 festgestellt wird, dass eine Berechtigung zur Aktivierung der Konfigurationsdatei besteht, wird in einem Freigabeschritt 20a die neue Konfiguration im Dauerspeicher der Steuerungseinrichtung gespeichert und in einem Aktivierungsschritt 20b die neue Konfiguration in der Steuerungseinrichtung aktiviert, so dass die Steuerungseinrichtung nach den neuen Konfigurationsdaten arbeiten kann.

Vermerkt sei noch, dass falls im fünfzehnten Schritt 15 festgestellt wird, dass die Überspiele der Konfigurationsdatei keine neuen Daten enthält, unmittelbar zum Aktivierungsschritt 20b übergegangen wird. Zudem ist das erfindungsgemäße Verfahren nicht auf speicherprogrammierbare Steuerungen beschränkt, sondern kann auch zum Überspielen von sicherheitsrelevanten Daten auf Robotersteuerungen oder Überwachungseinrichtungen verwendet werden, die besondere Anforderungen an die Datensicherheit stellen.

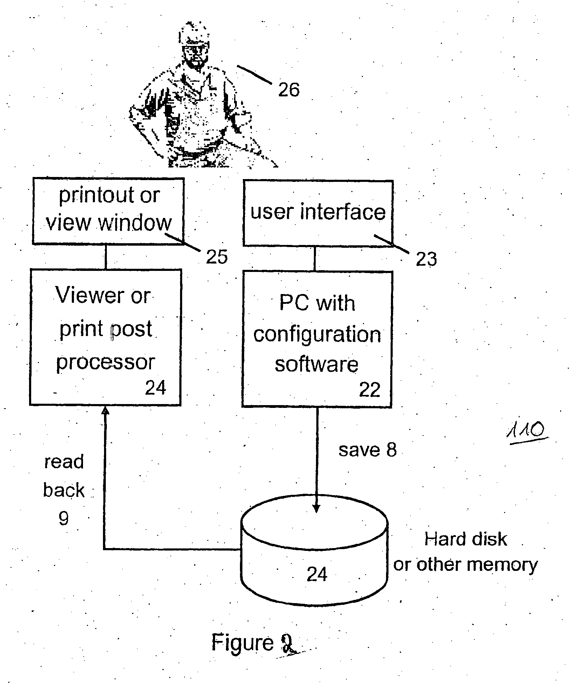

Fig. 2 zeigt ein System zur Durchführung des zuvor beschriebenen erfindungsgemäßen Verfahrens zur Änderung sicherheitsrelevanter Daten für eine Steuerungseinrichtung, wobei auf der beispielhaft dargestellten Systemanordnung die Verfahrensschritte erster Schritt 1 bis dreizehnter Schritt 13 ausgeführt werden. Hierzu ist eine erste Eingabevorrichtung 23 vorgesehen, über die ein Benutzer 26 die gewünschten Änderungen der sicherheitsrelevanten Daten eingibt. Informationen, die der Benutzer 26 aus dem ersten System 110 erhält, werden über eine erste Anzeigevorrichtung 25, beispielsweise ein Grafiktableau ein Bildschirm oder sonstige Anzeigevorrichtungen, dargestellt oder anzeigt. Die erste Eingabevorrichtung 23 ist mit einem Universalrechner 22 verbunden, auf dem im gewählten Beispiel das erfindungsgemäße Verfahren in Form eines Computerprogrammproduktes verwirklicht ist. Zur Durchführung des achten Schrittes 8 weist der Universalrechner 22 eine Festplatte 24 auf, auf dem die Konfigurationsdatei gespeichert wird. Anstatt oder redundant zu der Festplatte 24 ist es auch innerhalb des Erfindungsgedankens, dass andere Festspeichereinheiten verwendbar sind, wie zum Beispiel Memory-Cards (zum Beispiel SD-Format) oder andere dem Fachmann in vielfältiger Weise bekannte Dauerspeichergeräte oder -vorrichtungen. Zur Durchführung der Kontrollverfahrensschritte (zum Beispiel zum Auslesen der Konfigurationsdaten gemäß neunten Schritt 9 von der Festplatte 24) sind noch weitere Geräte im System 110 gezeigt. So werden die ausgelesenen Konfigurationsdaten im gewählten Beispiel sowohl von einer Druckvorrichtung, beispielsweise einem Drucker, einem Plotter oder in eine Druckdatei gedruckt und zudem über ein entsprechendes Computerprogramm auf der Anzeigevorrichtung 25 dem Benutzer 26 angezeigt.

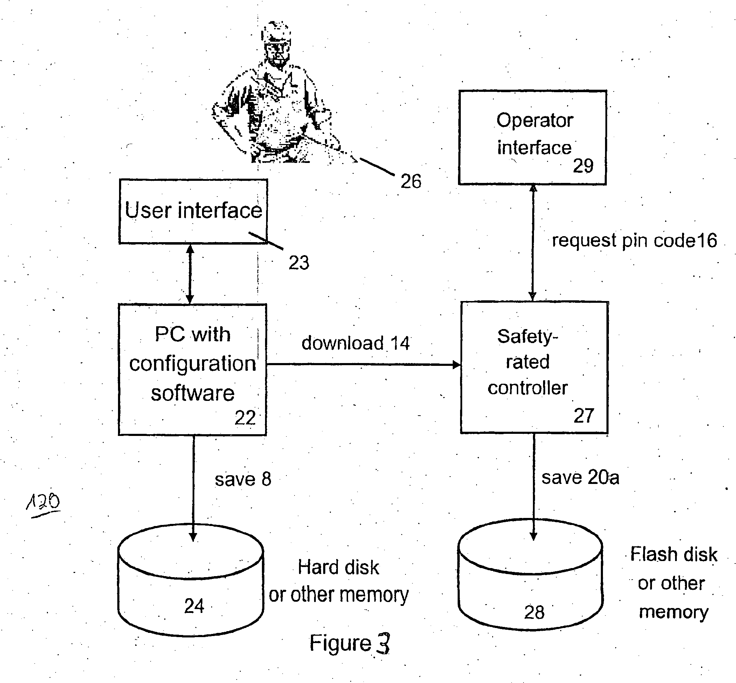

Fig. 3 zeigt ein zweites System 120, bei dem wiederum verschiedene Elemente des ersten Systems 110, nämlich die erste Eingabevorrichtung 23, die Festplatte 24 und der Universalrechner 22 dargestellt sind. Das zweite System 120 zeigt jedoch noch weitere Systemelemente, die dann, gegebenenfalls in Zusammenschau mit den weiteren Elementen aus der Figur 2, die Durchführung aller Verfahrensschritte, wie sie in Figur dargestellt sind, ermöglichen. Dies wird im nachfolgenden näher erläutert. So wird im gewählten Beispiel gemäß zweiten System 120 die Übertragung der Konfigurationsdaten vom Universalrechner 22 auf eine Steuerungseinrichtung 27, die bestimmten Sicherheitsanforderungen genügen muss (Safety Rated Controller) über ein nicht näher dargestelltes Computernetzwerk übertragen. Für die Sicherheitsabfrage ist die Steuereinrichtung 27 mit einer zweiten Eingabevorrichtung 29 verbunden, die unter Benutzer 26, beispielsweise zur Eingabe eines Aktivierungscodes gemäß sechzehnten Schritt 16 benutzt. Auch die Steuerungseinrichtung weist eine Dauerspeichervorrichtung 28, beispielsweise eine "Flash-Disk", eine Harddisk oder ein anderes Dauerspeichermedium auf.

Das erste System 110 sowie das zweite System 120 sind jedoch nur Beispiele für eine erfindungsgemäße Systemanordnung beziehungsweise Ausgestaltung des erfindungsgemäßen Systems, so ist es ohne weiteres denkbar, dass nur der Universal-PC 22 ständig über ein Netzwerk mit der Steuerungsvorrichtung 27 verbunden ist. Diese Verbindung kann aber auch nur zeitweise bestehen, nämlich dann, wenn eine Datenübertragung beispielsweise gemäß vierzehntem Schritt 14 erfolgt. Es ist aber auch denkbar, dass der Universal-PC 22 ein tragbarer PC ist (Laptop), und die Netzwerkanbindungen beziehungsweise Datenübertragung nicht über ein Kabel, sondern beispielsweise auch Funk (Bluetooth, Infrarot usw.) erfolgt, oder dass die Übertragung ohne direkte Übertragung, sondern mit Hilfe eines tragbaren Speichermediums (z.B. Speicherkarte, USB-Stick, Diskette) erfolgt.

Im Übrigen ist es auch ohne weiteres denkbar und innerhalb des Erfindungsgedankens, dass die geänderten sicherheitsrelevanten Daten auf einer entsprechenden Speichereinrichtung im Universalrechner 22 gespeichert werden, oder auch auf einer separaten Speichereinrichtung, oder aber auch auf der Speichereinrichtung der Steuereinrichtungseinrichtung 27, wobei im letzteren Fall eine Datenverbindung zwischen dem Universalrechner 22 und der Speichereinrichtung der Steuerungseinrichtung 27 besteht. Auch eine Zwischenschaltung weiterer Computer, oder Netzwerke (Word Wide Web, Intranet, lokale Netzwerke oder Arbeitsnetzwerke) ist ohne weiteres mit dem erfindungsgemäßen Verfahren und System realisierbar. Auf diese Weise ist auch sichergestellt, dass mit nur einem Konfigurationsdatensatz eine, mehrere oder viele Steuerungseinrichtungen mit Konfigurationsdaten versorgt werden.

Schließlich sei noch bemerkt, dass das System und das erfindungsgemäße Verfahren auch dahingehend ausgestaltet bzw. angewendet werden kann, dass die beschriebenen Systemkomponenten, insbesondere die Steuereinrichtung 27, die zweite Eingabevorrichtung 23 sowie die Speichervorrichtung 28 nur als virtuelle Komponenten eines Simulationsprogramms verwirklicht sind, und damit beispielsweise das erfindungsgemäße Verfahren in allen Varianten zu Testzwecken auf einem einzigen Standard-PC abläuft und verwirklicht ist.

### Bezugszeichenliste:

- 1: erster Schritt
- 2: zweiter Schritt
- 3: dritter Schritt
- 4: vierter Schritt
- 5: fünfter Schritt
- 6: sechster Schritt
- 7: siebter Schritt
- 8: achter Schritt
- 9: neunter Schritt
- 10: zehnter Schritt
- 11: elfter Schritt
- 12: zwölfte Schritt
- 13: dreizehnter Schritt
- 14: vierzehnter Schritt
- 15: fünfzehnter Schritt
- 16: sechzehnter Schritt
- 17: siebzehnter Schritt
- 18: achtzehnter Schritt
- 19: neunzehnter Schritt
- 20a: Freigabeschritt
- 20b: Aktivierungsschritt
- 21: einundzwanzigster Schritt
- 22: Universalrechner
- 23: erste Eingabevorrichtung
- 24: Festplatte
- 25: Anzeigevorrichtung
- 26: Benutzer
- 27: Steuerungseinrichtung
- 28: Dauerspeichervorrichtung
- 29: zweite Eingabevorrichtung
- 100: Verfahrensablauf
- 110: erstes System
- 120: zweites System

## Patentansprüche

1. Verfahren zur Änderung sicherheitsrelevanter Daten für eine Steuerungseinrichtung mit einer Datenverarbeitungsanlage, beginnend mit der Bildung einer ersten Prüfsumme über die sicherheitsrelevanten Daten, deren Speicherung gemeinsam mit den sicherheitsrelevanten Daten und der ersten Prüfsumme in wenigstens einem Datensatz in der Datenverarbeitungsanlage erfolgt,
**dadurch gekennzeichnet, dass**
o die sicherheitsrelevanten Daten mit der ersten Prüfsumme versiegelt werden, dass
o ein Freigabecode automatisch erzeugt wird, der den erzeugten Datensatz möglichst eindeutig identifiziert, dass
o der Freigabecode mit Hilfe eines der Steuerungseinrichtung bekannten Verfahrens verschlüsselt wird, welches Verfahren den Freigabecode für Menschen unlesbar macht, dass
o die sicherheitsrelevanten Daten aus einem Speicher der Datenverarbeitungsanlage zurückgelesen und
o mittels eines Anzeigeprogramms oder einer Druck- oder Zeicheneinrichtung dargestellt-werden, wobei das Anzeigeprogramm nicht identisch ist mit dem Eingabeprogramm, und
o anschließend eine Überprüfung auf Identität der erstellten oder geänderten Daten mit den zurückgelesenen Daten durch den Benutzer erfolgt sowie
o die Bildung einer zweiten Prüfsumme und Speicherung der zweiten Prüfsumme in dem wenigstens einen Datensatz erfolgt, nachdem Fehlerfreiheit festgestellt wurde.

2. Verfahren zur Änderung sicherheitsrelevanter Daten in einer Steuereinrichtung mit den in Anspruch 1 genannten Schritten, wobei
- im wenigstens einen Datensatz einen Freigabecode gespeichert wird, welcher vor der Erzeugung der ersten Prüfsumme durch einen Codegenerator erzeugt und durch ein Schlüsselmodul verschlüsselt wird, wobei
- der wenigstens eine Datensatz mit den sicherheitsrelevanten Daten, dem verschlüsselten Freigabecode, der ersten und der zweiten Prüfsumme als wenigstens ein neuer Datensatz in die Steuereinrichtung übertragen wird, und wobei
- der wenigstens eine neue Datensatz von der Steuerungseinrichtung geprüft wird bevor dieser in der Steuerungseinrichtung aktiviert wird.

3. Verfahren nach Anspruch 2, **dadurch gekennzeichnet, dass** die Prüfung des wenigstens einen neuen Datensatzes eine Prüfung darauf ist, dass der wenigstens eine neue Datensatz geänderte Daten enthält oder/und dass die Prüfsumme oder Prüfsummen im Vergleich zu den der Steuerungseinrichtung bekannten Prüfsummen bekannt ist.

4. Verfahren nach einem der vorgenannten Ansprüche, **dadurch gekennzeichnet, dass** vor der Aktivierung des wenigstens einen neuen Datensatzes ein Freigabeverfahren durchgeführt wird, bevorzugt eine Freigabe durch den zuvor von der Datenverarbeitungsanlage automatisch erzeugten Code.

5. Verfahren nach Anspruch 4, **dadurch gekennzeichnet, dass** im Freigabeverfahren die zwischen der Steuerungseinrichtung und einem Eingabegerät ausgetauschten Berechtigungsdaten verschlüsselt sind.

6. Verfahren nach einem der vorgenannten Ansprüche, **dadurch gekennzeichnet, dass** die sicherheitsrelevanten Daten verschlüsselt werden.

7. Verfahren nach einem der vorgenannten Ansprüche, **dadurch gekennzeichnet, dass** die Schlüssel für die Verschlüsselungsverfahren durch einen Zufallsgenerator erzeugt wird.

8. Verfahren nach einem der vorgenannten Ansprüche, **dadurch gekennzeichnet, dass** eine Berechtigung abgefragt wird bevor eine Änderung der sicherheitsrelevanten Daten zugelassen wird.

9. Verfahren nach einem der vorgenannten Ansprüche, **dadurch gekennzeichnet, dass** die aktuellen sicherheitsrelevanten Daten wenigstens teilweise auf einer Anzeigevorrichtung angezeigt werden.

10. Verfahren nach einem der vorgenannten Ansprüche, **dadurch gekennzeichnet, dass** die Verfahrensschritte wenigstens teilweise als Programmprodukte ausgeführt werden.

11. Verfahren nach einem der vorgenannten Ansprüche, **dadurch gekennzeichnet, dass** die entschlüsselten Daten von einer Druckvorrichtung ausgedruckt oder / und von einem ersten Programmprodukt erfasst und gegebenenfalls gespeichert werden.

12. Verfahren nach einem der vorgenannten Ansprüche, **dadurch gekennzeichnet, dass** die Erfassung oder Änderungen von Daten mit einem zweiten Programmprodukt durchgeführt wird.

13. Verfahren nach einem der vorgenannten Ansprüche, **dadurch gekennzeichnet, dass** die zurückgelesenen Daten mit einem dritten Programmprodukt oder durch ein Ausgabegerät dargestellt werden.

14. Verfahren nach einem der vorgenannten Ansprüche, **dadurch gekennzeichnet, dass** die Verfahrensschritte wenigstens teilweise auf einer Universaldatenverarbeitungsanlage ausgeführt werden.

15. System zur Durchführung eines Verfahren nach den vorherigen Ansprüchen zur Änderung sicherheitsrelevanter Daten für eine Steuerungseinrichtung mit einer Datenverarbeitungsanlage, die eine ersten Eingabevorrichtung zur Erstellung oder Änderung von Daten und ein erstes Verschlüsselungsmodul aufweist,
dadurch gekenntzeichnet, dass
o die Datenverarbeitungsanlage wenigstens zeitweise mit der Steuerungseinrichtung verbunden ist, dass
o die Datenverarbeitungsanlage ein zweites Verschlüsselungsmodul aufweist, dass
o die Verschlüsselungsmethoden des ersten und des zweiten Verschlüsselungsmoduls dem jeweils anderen Verschlüsselungsmodul bekannt sind, und dass
o ein Anzeigeprogramm oder eine Druck- oder Zeicheneinrichtung zur Darstellung zurückgelesener Daten vorgesehen ist, wobei das Anzeigeprogramm nicht identisch ist mit dem Eingabeprogramm.

16. System nach Anspruch 15, **dadurch gekennzeichnet, dass** die Steuerungseinrichtung eine zweite Eingabeeinrichtung aufweist oder Zugriff auf eine zweite Eingabeeinrichtung hat.

17. System nach Anspruch 15 oder 16, **dadurch gekennzeichnet, dass** die Systemsteuerung mit einer Prozesssteuerung zusammenarbeitet:

18. System nach einem der Ansprüche 15 bis 17, **dadurch gekennzeichnet, dass** die Datenübertragung durch einen tragbaren Speichers ermöglicht ist.

19. System nach einem der Ansprüche 15 bis 18, wobei durch einen weiteren Rechner oder eine weitere Steuerungseinheit die Daten zwischenspeichert sind und bei Bedarf oder auf Anforderung an mindestens eine Steuerungseinrichtung übertragbar sind.

## Claims

1. Method for modifying safety-relevant data for a control device having a data processing installation, starting with the formation of a first checksum over the safety-relevant data, which is stored together with the safety-relevant data and the first checksum in at least one data record in the data processing installation,
**characterized in that**
o the safety-relevant data are sealed with the first checksum,
o an enable code is automatically produced, which identifies the data record that has been produced as uniquely as possible,
o the enable code is encrypted with the aid of a method known to the control device, which method makes the enable code illegible to human beings,
o the safety-relevant data are read back from a memory in the data processing installation and
o are displayed by means of a display program or a printing or drawing device, with the display program not being identical to the input program, and
o the user subsequently checks whether the created or modified data are identical to the data read back, and
o a second checksum is formed and the second checksum is stored in the at least one data record once freedom from errors has been ascertained.

2. Method for modifying safety-relevant data in a control device having the steps mentioned in Claim 1 with
- an enable code being stored in the at least one data record, which enable code is produced by a code generator before producing the first checksum and is encrypted by means of a key module, with
- the at least one data record being transferred with the safety-relevant data, the encrypted enable code, the first and the second checksum as at least one new data record to the control device, and with
- the at least one new data record being checked by the control device before it is activated in the control device.

3. Method according to Claim 2, **characterized in that** the check of the at least one new data record is a check to determine whether the at least one new data record contains modified data and/or whether the checksum or checksums is or are known in comparison to the checksums that are known by the control device.

4. Method according to one of the abovementioned claims, **characterized in that** an enable process is carried out before activating the at least one new data record, preferably an enable process by means of the code which has already been produced automatically by the data processing installation.

5. Method according to Claim 4, **characterized in that** the authorization data interchanged between the control device and an input appliance is encrypted in the enable process.

6. Method according to one of the abovementioned claims, **characterized in that** the safety-relevant data is encrypted.

7. Method according to one of the abovementioned claims, **characterized in that** the key for the encryption process is produced by a random number generator.

8. Method according to one of the abovementioned claims, **characterized in that** an authorization is checked before any modification of the safety-relevant data is allowed.

9. Method according to one of the abovementioned claims, **characterized in that** at least some of the current safety-relevant data is displayed on a display apparatus.

10. Method according to one of the abovementioned claims, **characterized in that** at least some of the method steps are carried out as program products.

11. Method according to one of the abovementioned claims, **characterized in that** the decrypted data is printed out by a printing apparatus and/or is recorded by a first program product and may be stored.

12. Method according to one of the abovementioned claims, **characterized in that** the data is recorded or modified by a second program product.

13. Method according to one of the abovementioned claims, **characterized in that** the data which has been read back is displayed by a third program product, or by means of an output appliance.

14. Method according to one of the abovementioned claims, **characterized in that** at least some of the method steps are carried out on a universal data processing installation.

15. System for carrying out a method according to the preceding claims for modifying safety-relevant data for a control device having a data processing installation which has a first input apparatus for creating or modifying data and a first encryption module,
**characterized in that**
o the data processing installation is connected to the control device at least at times, **in that**
o the data processing installation has a second encryption module, **in that**
o the encryption methods of the first and of the second encryption module are known by the respective other encryption module, and **in that**
o a display program or a printing or drawing device for displaying data which have been read back is provided, with the display program not being identical to the input program.

16. System according to Claim 15, **characterized in that** the control device has a second input device, or has access to a second input device.

17. System according to Claim 15 or 16, **characterized in that** the system controller interacts with a process controller.

18. System according to one of Claims 15 to 17, **characterized in that** the data transmission is made possible by a portable memory.

19. System according to one of Claims 15 to 18, with the data being buffer-stored by a further computer or a further control unit, and in which case the data can be transferred to at least one control device when required or on demand.

## Revendications

1. Procédé de modification de données capitales de sécurité pour un dispositif de commande comportant une installation de traitement de données, commençant par la formation d'une première somme de vérification sur des données capitales de sécurité, dont la mémorisation a lieu conjointement aux données capitales de sécurité et à la première somme de vérification dans au moins un jeu de données dans l'installation de traitement de données, **caractérisé en ce que**
o les données capitales de sécurité sont mises sous scellé avec la première somme de vérification,
o un code de déblocage est généré automatiquement, lequel identifie de manière la plus univoque possible le jeu de données généré,
o le code de déblocage est crypté à l'aide d'un procédé connu du dispositif de commande, lequel procédé rend illisible aux individus le code de déblocage,
o les données capitales de sécurité sont relues dans une mémoire de l'installation de traitement de données et
o sont représentées, au moyen d'un programme d'affichage ou d'un dispositif d'impression ou de dessin, dans lequel le programme d'affichage n'est pas identique au programme d'entrée, et
o puis un contrôle de l'identité des données établies ou modifiées a lieu avec les données relues par l'utilisateur et
o la formation d'une deuxième somme de vérification et la mémorisation de la deuxième somme de vérification ont lieu dans l'au moins un jeu de données, après que l'absence d'erreurs a été constatée.

2. Procédé de modification de données capitales de sécurité dans un dispositif de commande présentant les étapes mentionnées dans la revendication 1, dans lequel :
- un code de déblocage est mémorisé dans au moins un jeu de données, qui est généré par un générateur de code avant la génération de la première somme de vérification et est crypté par un module de cryptage, dans lequel
- l'au moins un jeu de données comportant les données capitales de sécurité, le code de déblocage crypté, la première et la deuxième somme de vérification est transmis comme au moins un nouveau jeu de données dans le dispositif de commande, et dans lequel
- l'au moins un nouveau jeu de données est vérifié par le dispositif de commande avant que celui-ci soit activé dans le dispositif de commande.

3. Procédé selon la revendication 2, **caractérisé en ce que** la vérification de l'au moins un nouveau jeu de données est une vérification de ce que l'au moins un nouveau jeu de données contient des données modifiées et/ou la somme de vérification ou les sommes de vérification sont connues comparé aux sommes de vérification connues du dispositif de commande.

4. Procédé selon une des revendications précédentes, **caractérisé en ce qu'**avant l'activation de l'au moins un nouveau jeu de données, un procédé de déblocage est mis en oeuvre, de préférence un déblocage par le code précédemment généré automatiquement par l'installation de traitement de données.

5. Procédé selon la revendication 4, **caractérisé en ce que** dans le cadre du procédé de déblocage, les données d'autorisation échangées entre le dispositif de commande et un appareil d'entrée sont cryptées.

6. Procédé selon une des revendications précédentes, **caractérisé en ce que** les données capitales de sécurité sont cryptées.

7. Procédé selon une des revendications précédentes, **caractérisé en ce que** la clé pour le procédé de cryptage est générée par un générateur de nombres aléatoires.

8. Procédé selon une des revendications précédentes, **caractérisé en ce qu'**une autorisation est interrogée avant qu'une modification des données capitales de sécurité soit autorisée.

9. Procédé selon une des revendications précédentes, **caractérisé en ce que** les données capitales de sécurité actuelles sont affichées au moins partiellement sur un dispositif d'affichage.

10. Procédé selon une des revendications précédentes, **caractérisé en ce que** les étapes du procédé sont effectuées au moins partiellement comme des produits de programme.

11. Procédé selon une des revendications précédentes, **caractérisé en ce que** les données décryptées sont imprimées par un dispositif d'impression ou/et détectées par un premier produit de programme et le cas échéant mémorisées.

12. Procédé selon une des revendications précédentes, **caractérisé en ce que** la détection ou les modifications des données sont effectuées avec un deuxième produit de programme.

13. Procédé selon une des revendications précédentes, **caractérisé en ce que** les données relues sont représentées avec un troisième produit de programme ou par un appareil de sortie.

14. Procédé selon une des revendications précédentes, **caractérisé en ce que** les étapes de procédé sont exécutées au moins partiellement sur une installation de traitement de données universelle.

15. Système de mise en oeuvre d'un procédé selon les revendications précédentes de modification de données capitales de sécurité pour un dispositif de commande comportant une installation de traitement de données, qui présente un premier dispositif d'entrée pour établir ou modifier des données et un premier module de cryptage, **caractérisé en ce que**
o l'installation de traitement de données est reliée au moins ponctuellement au dispositif de commande,
o l'installation de traitement de données présente un deuxième module de cryptage,
o les méthodes de cryptage du premier et du deuxième module de cryptage sont connues de l'autre module de cryptage respectif, et
o un programme d'affichage ou un dispositif d'impression ou de dessin pour représenter les données relues est prévu, dans lequel le programme d'affichage n'est pas identique au programme d'entrée.

16. Système selon la revendication 15, **caractérisé en ce que** le dispositif de commande présente un deuxième dispositif d'entrée ou possède un accès à un deuxième dispositif d'entrée.

17. Système selon les revendications 15 ou 16, **caractérisé en ce que** la commande de système interfonctionne avec une commande de processus.

18. Système selon une des revendications 15 à 17, **caractérisé en ce que** la transmission de données est rendue possible par une mémoire portative.

19. Système selon une des revendications 15 à 18, dans lequel les données subissent une mémorisation intermédiaire par l'intermédiaire d'un autre ordinateur ou d'une autre unité de commande et au besoin ou sur demande peuvent être transmises à au moins un dispositif de commande.
